# EUROPEAN PATENT APPLICATION

(11) **EP 1 050 204 A2**
(43) Date of publication of application: **08.11.2000**
(21) Application number: 00201614.5
(22) Date of filing: 03.05.2000
(51) Int. Cl.: A01C 23/04

(54) **Coupling assembly**

(30) Priority: 03.05.1999 NL 1011953
(71) Applicant: Capelle, Adriaan Cornelis, 8308 RT Nagele (NL)
(72) Inventor: Capelle, Adriaan Cornelis, 8308 RT Nagele (NL)
(74) Representative: Jorritsma, Ruurd

(57) **Abstract**

Coupling assembly comprising a first and second coupling part (10,11) which can be joined to one another. The first coupling part is provided with a valve (12) that can be operated from the outside. Said valve is operated by control means (29) mounted on the first coupling part. On moving the two parts to be coupled towards one another a fluid-tight connection is produced and the first valve is then opened by operation from the second coupling part.

## Description

The present invention relates to a coupling assembly comprising first and second parts to be coupled to one another, each provided with, first and second, respectively, conduit means in order to provide a fluid connection on coupling, said first and second parts being movable with respect to one another to provide for coupling/uncoupling, at least the first coupling part being provided in the first conduit means with a first valve that can be externally operated. Such a coupling assembly is generally known in the prior art. The invention is employed in particular for connecting a mobile slurry tank to a slurry container or other slurry storage facility. However, it must be understood that the present invention can be employed for coupling a wide variety of constructions which are movable relative to one another.

An installation of this type is disclosed in DE 8908904.9U1. This publication describes the coupling between a tank vehicle used in agriculture and a further construction. A hose or tube is connected to the tank, which hose or tube can be inserted in a funnel, which funnel is connected to the other part, such as a further tank. A valve located in the connecting conduit to the funnel is operated by coupling the hose or tube to the funnel.

The hose or tube connected to the tank is provided with a further valve close to the tank.

Such installations are used, for example, for coupling a mobile slurry tank to a slurry container. After first being collected from a stall in a slurry container, slurry is often spread over the land or injected. Especially if relatively lightweight vehicles have to move over the land, the number of trips that has to be made over the land will be appreciable. In the prior art it was customary to provide the slurry tank with a hose and to place this hose in the slurry container. Vacuum was then applied to the tank and in this way slurry was pumped from the container into the tank. On completion of the action, the hose was removed from the container again by the operator and thrown over the tank.

This method has a number of disadvantages. Firstly, the weight of the hose filled with slurry to be moved by the operator is appreciable and in any event is much higher than is acceptable under current legislation. This applies in particular if employees move such a hose. Secondly, when the hose is moved after removal from the container, manure will spill onto the farmyard. This is not a problem if it happens once, but if 40 - 50 trips are made in a day an appreciable puddle of slurry is produced, which is undesirable and has a polluting effect. Moreover, a large number of movements on the part of the operator are required for coupling.

The disadvantage of the construction according to DE 8908904.9U1 is that when drawing up of slurry or the like is complete an appreciable volume remains behind in the tube or hose connected to the tank. To prevent this being spilled, the use of a funnel is proposed in this Gebrauchsmuster (utility model). As a result of the use of a funnel, on the one hand the construction becomes particularly bulky and, on the other hand, an amount of slurry remains present which, after the installation has been used, remains in contact with the environment and releases gases.

The aim of the present invention is to provide a construction which is more compact and with which negligible quantities of fluid to be pumped remains behind after uncoupling the coupling assembly.

This aim is achieved with a coupling assembly as described above in that a second valve is fitted in said second coupling part.

According to the invention it is proposed that the valve is no longer fitted close to the tank but is fitted close to the end of the tube or hose which is connected to the tank, that is to say in the second coupling part. With this arrangement the valve is fitted as close as possible to the free end of the hose or tube concerned.

The slurry tank or any other container for removing or supplying products is provided with the second coupling part. After the coupling between the first and second coupling parts has been produced, the valve in the first coupling part is operated by the second coupling part. This can take place from the control point, in particular the tractor. Consequently it is not necessary for the operator to leave the tractor to produce or disconnect the coupling. The container is then partially emptied under suction and the contents thereof transferred to the tank. If the tank is about full, the valve on the first coupling part is closed through the control means but the second conduit remains under reduced pressure so that it is essentially emptied under suction on uncoupling, as a result of which no manure material is spilled. Because electrical, pneumatic or hydraulic power is available on the mobile slurry tank via the tractor, operation of the valve can be achieved in a simple manner.

This can be further improved if, according to an advantageous embodiment of the invention, a venting valve is present between the first abovementioned valve and the coupling surface. The various features are so controlled that after filling the slurry tank the valve is closed on opening the venting valve. Because there is still reduced pressure in the discharge conduit for manure, air will be drawn in via the venting valve and the remaining manure material will also be removed, so that there is no spilling on uncoupling.

In this way the final residues of fluid to be pumped are also removed from the space between the two valves. The venting valve is preferably operated by coupling the two coupling parts.

Accurate positioning of the first and second coupling parts with respect to one another is important if the aim is to produce a coupling without intervention by hand. A particularly simple positioning can be achieved by providing a baseplate having a coupling surface which is essentially horizontal in use. This baseplate is connected to the first conduit section and can be moved into any position on the farmyard. The slurry tank is positioned above this baseplate in a certain way and coupling can be produced. This positioning of the slurry tank can be facilitated if the baseplate is constructed as a baseplate that can be driven over, so that the tractor driver knows that if he drives over this baseplate with his rear wheels he is in the correct position in the lateral direction.

The second coupling part is preferably provided with a jack for the vertical movement thereof. In this way the second coupling part can be moved relative to the slurry tank towards the ground, that is to say towards the baseplate described above or another construction.

Operation of the first valve with the aid of the control means described above can be implemented in any way known from the prior art. Preferably a tilting yoke is fitted which is provided on one side with a rod connected to the operating rod of the valve, constructed as a sliding valve, in the first conduit section and a lever mounted on the second coupling part operated by the control means engages on the opposite side of the tilting yoke.

It will be understood that many variants are possible. Operation of the first and second valve and the venting valve can take place by hand. It is also possible to control the various features stepwise with the aid of electronic aids. A first simple construction providing control in successive steps can be obtained if the jack for moving the second coupling part up and down has an overpressure valve in the supply conduit. If a predetermined contact force of the second coupling part on the baseplate is exceeded this overpressure valve is opened and in this way operates the jack for the control means for the valve in the first conduit section.

The invention will be explained in more detail below with reference to an illustrative embodiment shown in the drawing. In the drawing:
Fig. 1 shows, diagrammatically, a side view of a tractor/slurry tank combination and a slurry container;
Figs 2 - 4 show various stages in coupling the first and second coupling part in accordance with a first embodiment of the invention;
Figs 5 and 6 show, diagrammatically, a second embodiment of the coupling assembly according to the invention and
Fig. 7 shows, diagrammatically, a variant of the construction according to Figs 5 and 6.

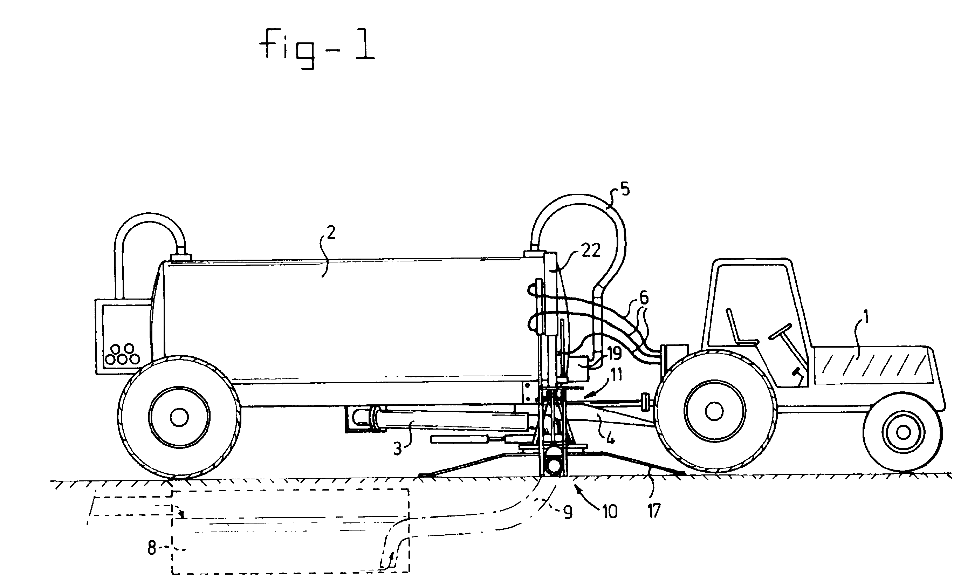

In Fig. 1 a tractor is indicated diagrammatically by 1. A mobile slurry tank is indicated by 2. The tractor and tank are coupled through a frame 4. A conduit 3 connects to tank 2. This conduit functions to take up slurry from, for example, a container 8, which can have been installed either underground or above ground. Transport of slurry is achieved by means of a vacuum supplied by conduit 5 which is connected to a vacuum pump 19. By this means reduced pressure is produced in the tank 2, which thus effects the transport of slurry. Hydraulic and control conduits are indicated by 6.

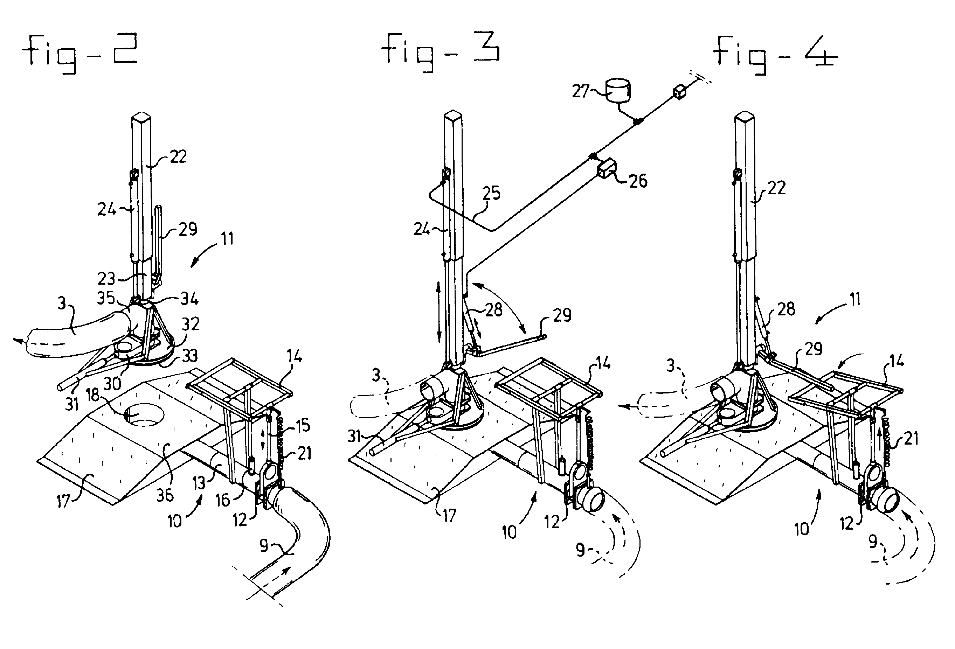

As already indicated, a slurry container is indicated by 8. This can be any slurry container, that is to say a slurry pit or a high standing slurry container or any other store. A conduit 9 is introduced into the slurry container, as can be seen from Fig. 1. The end of conduit 9 is provided with the first coupling part 10, whilst the end of conduit 3 is provided with the second coupling part 11. Details of the first and second coupling part can be seen in Figs 2 - 4.

It can be seen from these figures that conduit 9 is connected via sliding valve 12 to a pipe 13. The latter opens into an outlet opening 18 made in a drive-on plate 17. Close to the outlet opening 18 the drive-on plate is of essentially horizontal construction, that is to say the coupling surface 36 is a flat horizontal surface. Sliding valve 12 can be operated by means of a rod 15 which is connected to a tilting yoke 14. A spring 21 is fitted to drive the tilting yoke into the position for closing valve 12. The tilting yoke 14 is also connected to venting valve 16. As can be seen from the figures, the other side of the tilting yoke 14 can be engaged by an operating lever 29. The latter is mounted on part 22. This consists of a part 22 firmly fixed to the frame 4.

A movable part 23 is joined to fixed part 22. Mutual movement of the parts takes place by means of a jack 24. Jack 24 is connected to a conduit 25 which can be controlled in some way or other from the control point on the tractor. A gas buffer 27 and an overpressure valve 26 are present in this conduit 25. The branch conduit of this overpressure valve 26 is connected to jack 28 which operates the lever 29 described above.

The end of the movable part 23 is connected via a ball joint 34 to the actual second coupling part 11. The latter consists of a sliding valve 30 which on one side is connected to a coupling flange 32 which can be mounted on outlet opening 18 so as to provide a seal with the aid of a rubber ring 33 fitted around it. On the other side the sliding coupling part 11 consists of an outflow stub 35 which is connected to conduit 3.

Valve 30 can be operated with the aid of jack 31 and can also be controlled from the driver's control point. The various features can be automated so that the correct sequence of the various steps takes place.

The construction described above functions as follows. If a slurry tank 2 has to be filled from a container 8, the first coupling part 10 is first placed on the farmyard and connection to the slurry container 8 is provided via hose 9. The installation is then ready for use. The operator will drive the rear wheel of the tractor over the drive-on plate 17 and so will know that the lateral position of the first coupling part with respect to the second coupling part is correct. He will then move the slurry tank/tractor combination until the second coupling part is above the first coupling part in the vertical direction. Jack 24 is then operated and part 23 moves downwards in the direction of opening 18. As a result of the presence of ball joint 34 it is ensured that coupling flange 32 is in facing contact with the coupling surface 36. In this position both valves 12 and 30 are closed and the venting valve 16 is opened. Connection between coupling flange 32 and coupling surface 36 is then produced. The rubber ring 33 provides a fluid seal. After contact between coupling flange 32 and drive-on plate 17 has been produced, the pressure in the conduit 25 will rise. As a result, the overpressure valve 26 opens and jack 28 is operated, as a result of which lever 29 moves downwards (see Figs 3 and 4) and engages on tilting yoke 14. As a result the operating rod 15 is moved upwards.

During this operation the venting valve 16 is first fully closed and only then does opening of sliding valve 12, that is to say connection of conduit 9 to opening 18, take place. In the interim or thereafter valve 30 is opened and transport of manure from container 9 to slurry tank 2 can take place on applying vacuum to the tank. A further pressure limiter is fitted to prevent the second coupling part starting to act as a ram for the slurry tank. This could lead to unacceptable damage. The gas buffer 27 is present to be able to take up any slight variations in height during the transport operation, as a result of which compensation is provided and the pressure in conduit 25 is kept essentially constant during transport.

After filling, jack 28 is operated in the reverse direction, so that the coupling yoke 14 moves back into the original position. During this operation valve 12 is first closed and venting valve 16 is then opened. Because vacuum is still applied to the slurry tank, air will now move via venting valve 16 through opening 18 and conduit 3 to the slurry tank, the final residues of manure being removed. Valve 30 is then closed and the second coupling part is then moved away from the first coupling part by again operating jack 24. The driver can then transport the manure.

If the slurry tank has been overfilled, that is to say is completely full, the operation described above for drawing in air is not possible. In such a case some manure can first be returned from the tank to the slurry container under pressure and the operation described above can then take place.

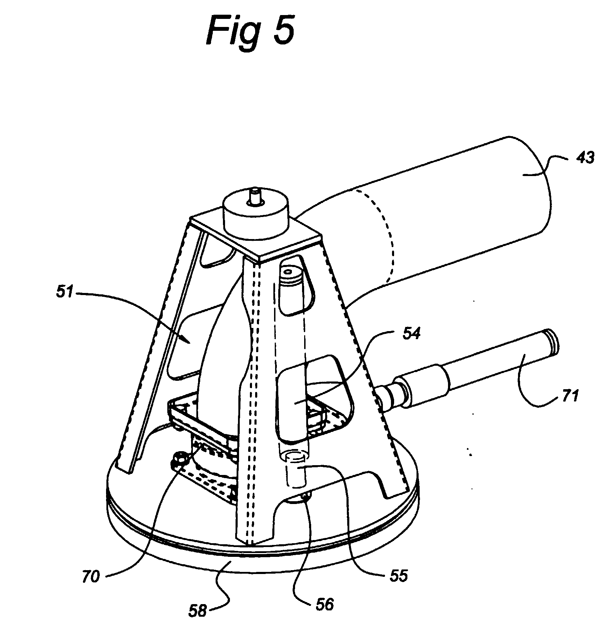

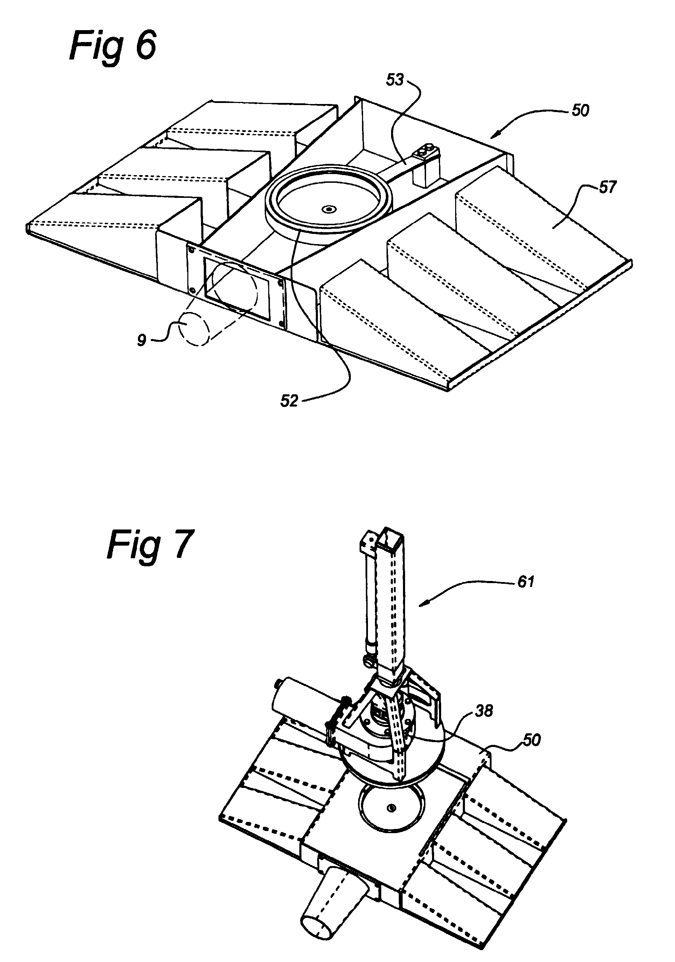

A somewhat modified embodiment of the construction described above is shown in Figs 5 and 6. Only the modified parts which are of importance for the present invention are shown.

In Figures 5 and 6 the first coupling part is indicated by 50 and the second coupling part by 51. The abovementioned sliding valve in the first coupling part has been replaced by a valve loaded by spring 53. The spring force generated by spring 53 presses valve 52 upwards into a closing position. The valve can be opened by exerting pressure on valve face 52.

In the second coupling part 51 there is a conduit 43 which is connected to the tank. The valve in the second coupling part is indicated by 70 and this is operated by an air cylinder 71. A further compressed air cylinder is indicated by 54. The plunger thereof is shown in dotted conduits and has reference numeral 55. When this plunger is in the retracted position it exposes a vent opening 56. In the position in which it has been brought outwards said plunger blocks opening 56.

The drive-on plate is indicated by 57.

The construction described above functions as follows. Foot 58 is brought above the valve face of the valve 52 in the manner described above, after which closure takes place with some sort of seal. During this operation all valves are closed and plunger 55 has been moved upwards, that is to say opening 56 is exposed. Plunger 55 is then moved downwards and on closing off opening 56 valve 52 is pressed open by plunger 55. Valve 70 can then be opened and the pumping operation take place. On completion of the pumping operation plunger 55 is moved back and initially closes valve 52. Opening 56 is then exposed and this acts as a vent opening. Valve 70 can then be closed. If operation is under reduced pressure this will promote the seal between the coupling parts. However, operation under overpressure is also possible. Vent opening 56 can be provided with a one-way valve so that air is only able to enter.

It will be understood that the various features can be controlled in a simple manner using relatively simple pneumatics or electronics.

Finally, Figure 7 shows a further embodiment of the present invention in which the second coupling part is indicated by 61. This essentially corresponds to the second coupling part shown with reference to Figures 5 and 6. The most essential modification is the presence of a motor 38, by means of which the fluid to be pumped is pumped in the immediate vicinity of the two valves.

It will be understood that the sequence of steps described above can be carried out either manually or (partially) automated. For those skilled in the art automation is an obvious measure. It will also be understood that the various components described here can be replaced by equivalent components without going beyond the scope of the present application. For instance, the transport of slurry or the like can be carried out with any other pump in any suitable location. Moreover, the coupling assembly described here can be used for purposes other than for the transport of slurry.

## Claims

1. Coupling assembly comprising first and second parts (10, 11) to be coupled to one another, each provided with, first (9, 13) and second (3, 35), respectively, conduit means in order to provide a fluid connection on coupling, said first and second parts being movable with respect to one another to provide for coupling/uncoupling, at least the first coupling part being provided in the first conduit means with a first valve (12) that can be operated from the outside, characterised in that a second valve (30) is fitted in said second coupling part.

2. Coupling assembly according to Claim 1, wherein a venting valve (16) is fitted in said first conduit means between said first valve and the coupling surface in said first coupling part, which venting valve is so controlled that said venting valve is closed on opening said first valve (12) and said venting valve is opened on closing said first valve.

3. Coupling assembly according to one of the preceding claims, wherein the second coupling part is provided with control means (29) for said first controllable valve, which control means are designed to be effective after the coupling has been produced.

4. Coupling assembly according to one of the preceding Claims, wherein said first part comprises a baseplate (17) having a coupling surface (36) which is essentially horizontal in use.

5. Coupling assembly according to one of the preceding Claims, wherein said second conduit means is connected to a mobile construction (1, 2) and is movable in the vertical direction with respect to said construction.

6. Coupling assembly according to one of the preceding Claims, wherein said first valve (12) is provided with an operating rod (15) connected to one side of a tilting yoke (14), the other side of the tilting yoke being equipped to come into engagement with said control means.

7. Coupling assembly according to Claim 5, comprising a jack (24) for vertical movement of said second coupling part, wherein an overpressure valve (26), the overpressure branch of which is connected to said control means, is fitted in the feedline to said jack.

8. Coupling assembly according to one of the preceding Claims, wherein said first valve (52) comprises a resilient valve and wherein second coupling part (41) comprises an operating rod which extends through the interior of said conduit means and is able to engage said resilient valve.
